# EUROPÄISCHE PATENTANMELDUNG

(11) **EP 0 730 056 A1**
(43) Veröffentlichungstag der Anmeldung: **04.09.1996**
(21) Anmeldenummer: 96100169.0
(22) Anmeldetag: 08.01.1996
(51) Int. Cl.: D04H 13/00

(54) **Textiles Flächengebilde**

(30) Priorität: 09.01.1995 DE 29500240 U
(71) Anmelder: Ems-Inventa AG, CH-8039 Zürich (CH)
(72) Erfinder: Fischer, Bruno, 7013 Domat/Ems (CH)
(74) Vertreter: Müller-Boré & Partner Patentanwälte

(57) **Zusammenfassung**

Die Erfindung betrifft ein textiles Flächengebilde, das ein Trägergewebe, das beidseitig mit einem, insbesondere kreuzgelegten, leicht vorvernadelten, Vlies vernadelt und durch Thermobehandlung fixiert ist, wobei mindestens ein Vlies einen Anteil an Klebefasern mit einem Schmelzpunkt von unter 170°C enthält.

## Beschreibung

Die Erfindung betrifft ein neuartiges textiles Flächengebilde in der Art einer Decke. Dazu wird ein Trägergewebe beidseitig mit je einem Vlies vernadelt. Diese Vliese enthalten nebst Trägerfasern einen Anteil Schmelzklebefasern, die nach thermischer Verfestigung für die Einbindung der Trägerfaser sorgen.

Herkömmliche Wolldecken werden in aufwendiger Arbeit produziert: Kette und Schuß müssen separat hergestellt werden durch Fasermischen, Kardieren, Strekken zum Vorgarn und Zwirnen. Darauf folgt das Zetteln, Auflegen der Zettel, Herstellen der Schußspulen und das Weben. Das Gewebe wird danach foulardiert, gerauht, geschoren und schließlich konfektioniert. Es werden Materialien wie Wolle, Polyacryl, Polyamide, Polypropylen und dergleichen Materialien dafür eingesetzt.

Die vorgenannte Art der Herstellung von gewirkten textilen Flächengebilden wie Decken ist aufwendig und teuer.

Die Aufgabe der Erfindung ist es deshalb, neuartig konstruierte textile Flächengebilde wie Decken zur Verfügung zu stellen, die sehr rationell und kostengünstig hergestellt werden können.

Diese Aufgabe wird gelöst durch ein textiles Flächengebilde, wie eine Decke, die aus einem Grund- bzw. Trägergewebe besteht, das beidseitig mit einem, insbesonderen kreuzgelegten, leicht vorvernadelten, Vlies vernadelt und durch eine nachfolgende Thermobehandlung dann fixiert worden ist. Mindestens ein Vlies enthält einen Anteil an Schmelzklebefasern mit einem Schmelzpunkt von unter 170°C.

Das Vlies besteht aus Trägerfasern wie Wolle, Polyacryl, Polyamiden oder anderen textilen Fasern des Wolltyps oder ihren Gemischen (3 bis 20 dtex), zu denen ein Anteil von 3 bis 50% einer Schmelzklebefaser mit Schmelzpunkt von 90-170°C gemischt wird. Diese Schmelzklebefasern können polymereinheitlich oder als Bikomponentenfasern vorliegen und bevorzugt aus der Gruppe der Polyamide, Polyester, Polyolefine oder deren Biends stammen. Besonders bevorzugt sind Copolyamide oder Copo;yester. Die Schmelzklebefaser hat die Aufgabe, der Trägerfaser nach dem Bondieren, das zumindest zum teilweisen Schmelzen einzelner tiefschmelzender Anteile des Vlieses führt, eine Verfestigung des Flors herbeizuführen und zusätzlich den Flor mit dem Grundgewebe zu verbinden. Durch diese neuartige Struktur erhält die Decke die notwendige Dimensionsstabilität.

Die Bondierung des genadelten Flächengebildes geschieht vorzugsweise im Ofen bei einer Temperatur oberhalb des Schmelzpunktes der Schmelzklebefaser.

Die so bondierte Ware wird gerauht, geschoren, gewaschen und mit Weichmacher ausgerüstet.

Dieses Verfahren erlaubt durch die Wahl der Trägerfaser, auch die Herstellung hochbauschiger Flächengebilde, wie sie in herkömmlicher Art nur sehr aufwendig herstellbar sind.

Decken der erfindungsgemäßen Art zeichnen sich durch weichen Griff, Flauschigkeit, hohen Gebrauchswert und Waschbeständigkeit aus. Ein besonderer Vorteil liegt in der Einfachheit der Herstellung. Da auf die Herstellung von Zwirnen und auf das Weben verzichtet werden kann, wird die Herstellung der erfindungsgemäßen Decken erheblich kostengünstiger. Dazu kommt die hohe Produktivität des Bondierprozesses, was die Herstellungskosten nochmals bedeutend senkt. Insbesondere ist es von Vorteil, daß durch die Wahl der Trägerfasern auch Decken mit hohem Bausch hergestellt werden können.

### Beispiel 1:

Es wird ein kreuzgelegtes, leicht vorvernadeltes Vlies hergestellt von ca. 200 g/m², bestehend aus 93% Polyacrylfaser Dolan® 6,7 dtex / 60 mm und 7% Schmelzklebefaser Grilon® K-140 11 dtex / 80 mm oder Grilon® K 115 11 dtex / 80 mm.

Dieses Vlies wird beidseitig auf ein Grundgewebe aufgenadelt. Dies kann ein Gewebe von 30 g/m² sein, Kette und Schuß Nm 60, Kette aus Baumwolle, Schuß aus Polyamid. Diese Finish-Vernadelung ergab ein Vlies von ca. 420 g/m².

Diese Sandwichkonstruktion wird im Durchluftofen bei einer Temperatur von 120 bis 180°C, insbesondere von 160°C und einer Verweilzeit von 2 bis 8 Min., insbesondere von 4 Min. bondiert. Das bondierte Gewebe wird auf einer Lamperti in 8 Passagen aufgerauht, geschoren, bei 40°C gewaschen und mit dem Weichmacher Belsoft® 200 oder Tubingal® WES ausgerüstet. Die Decke wird bei 110°C (2,5 Min.) getrocknet.

### Beispiel 2:

Es wird ein kreuzgelegtes, leicht vorvernadeltes Vlies hergestellt von ca. 200 g/m², bestehend aus einer ersten Lage aus 100% Polyacrylfaser Dolan® 5,7 dtex / 60 mm und einer zweiten Lage aus 86% Polyacrylfaser Dolan® 6,7 dtex / 60 mm, 14% Grilon® K-140 11 dtex / 80 mm oder 14% Grilon® K 115 11 dtex / 80 mm. Beide Vlieslagen werden in der Krempel gefahren. Im Kreuzleger werden die Vliese über Umlenkbleche aufeinandergelegt. Anschließend erfolgt die Vorvernadelung.

Zwischen diese vorvernadelten Vliese wird ein Stützgewebe aus hydrophiler Baumwollgaze (Typ 17) eingelegt. Danach erfolgt die Finish-Vernadelung und es wird ein Vlies von ca. 420 g/m² hergestellt.

Diese Sandwichkonstruktion wird im Mathis-Ofen bei einer Temperatur von 160°C für die Variante mit Grilon® K-140 für 4 Min. und für die Variante Grilon® K-115 bei 150°C / 4. Min. bondiert.

Das bondierte Gewebe wird auf einer Lamperti in 8 Passagen aufgerauht, geschoren, bei 40°C gewaschen und mit dem Weichmacher Belsof® 200 oder Tubingal® WES ausgerüstet. Die Decke wird bei 110°C für 2,5 Min. getrocknet.

## Patentansprüche

1. Textiles Flächengebilde, gekennzeichnet durch,
ein Trägergewebe, das beidseitig mit einem, insbesondere kreuzgelegten, leicht vorvernadelten, Vlies vernadelt und durch Thermobehandlung fixiert ist, wobei mindestens ein Vlies einen Anteil an Klebefasern mit einem Schmelzpunkt von unter 170°C enthält.

2. Textiles Flächengebilde gemäß Anspruch 1, dadurch gekennzeichnet, daß das Träger- bzw. Grundgewebe aus Fasern aus der Gruppe Wolle, Polyacryl, Polyamid und andere textile Faser des Wolltyps oder ihren Gemischen besteht.

3. Textiles Flächengebilde gemäß Anspruch 1, dadurch gekennzeichnet, daß das Vlies aus Fasern aus der Gruppe Wolle, Polyacryl, Polyamid oder andere textile Faser des Wolltyps oder ihren Gemischen besteht, zu denen ein Anteil von 3 bis 50% einer Schmelzklebefaser mit einem Schmelzpunkt von unter 170°C zugemischt ist.

4. Textiles Flächengebilde gemäß Anspruch 3, dadurch gekennzeichnet, daß die Schmelzklebefasern polymereinheitlich oder als Bikomponentenfasern vorliegen und bevorzugt aus der Gruppe der Polyamide, Polyester, Polyolefine oder deren Blends stammen.

5. Textiles Flächengebilde gemäß Anspruch 4, dadurch gekennzeichnet, daß die Schmelzklebefasern Copolyamide oder Copolyester sind.

6. Textiles Flächengebilde gemäß einem der Ansprüche 4 und 5, dadurch gekennzeichnet, daß das Polyamid ein Copolyamid mit einem Schmelzpunkt unter 150°C ist.

7. Textiles Flächengebilde gemäß einem der Ansprüche 4 und 5, dadurch gekennzeichnet, daß der Polyester ein Copolyester mit einem Schmelzpunkt unter 150°C ist.

8. Textiles Flächengebilde gemäß einem der voranstehenden Ansprüche, dadurch gekennzeichnet, daß das Flächengebilde durch eine Thermobehandlung bei Temperaturen von 120 bis 180°C, insbesondere von 160°C und einer Verweilzeit von 2 bis 8 Min., insbesondere von 4 Min., bondiert worden ist.

9. Textiles Flächengebilde gemäß einem der voranstehenden Ansprüche, dadurch gekennzeichnet, daß das bondierte Gewebe gerauht, geschoren, gewaschen und mit Weichmacher ausgerüstet worden ist.

10. Textiles Flächengebilde gemäß einem der voranstehenden Ansprüche, dadurch gekennzeichnet, daß es eine Decke ist.
